Europäisches Patentamt

European Patent Office

Office européen des brevets

(19)

(11) Veröffentlichungsnummer: **0 282 029 B1**

## (12) EUROPÄISCHE PATENTSCHRIFT

(45) Veröffentlichungstag der Patentschrift: **09.09.92**

(51) Int. Cl.⁵: **G01J 1/04**

(21) Anmeldenummer: **88103714.7**

(22) Anmeldetag: **09.03.88**

(54) **Einrichtung zur Messung der aus dem Halbraum oder Raum kommenden elektromagnetischen Strahlung.**

(30) Priorität: **12.03.87 DE 3708043**

(43) Veröffentlichungstag der Anmeldung:
**14.09.88 Patentblatt 88/37**

(45) Bekanntmachung des Hinweises auf die
Patenterteilung:
**09.09.92 Patentblatt 92/37**

(84) Benannte Vertragsstaaten:
**AT BE CH DE FR GB IT LI LU NL SE**

(56) Entgegenhaltungen:
**DE-A- 3 423 494**
**DE-B- 1 573 283**

(73) Patentinhaber: **Deutsche Forschungsanstalt
für Luft- und Raumfahrt e.V.
Linder Höhe Postfach 90 60 58
W-5000 Köln 90(DE)**

(72) Erfinder: **Lorenz, Dieter, Dr.
Nordstrasse 21
W-8126 Hohenpeissenberg(DE)**

(74) Vertreter: **von Kirschbaum, Albrecht,
Dipl.-Ing.
Hermann-Ehlers-Strasse 21a
W-8034 Germering(DE)**

EP 0 282 029 B1

## Beschreibung

Die Erfindung betrifft die Einrichtung zur Messung der aus dem dem Raumwinkel $2\pi$ entsprechenden Halbraum oder aus dem dem Raumwinkel $4\pi$ entsprechenden Raum kommenden elektromagnetischen Strahlung nach dem Oberbegriff des Anspruchs 1.

Unter anderem werden im Bereich der Meteorologie Messungen der solaren und der terrestrischen Strahlung in einem Wellenlängenbereich von etwa $0,3\mu m$ bis $3\mu m$ bzw. von $3\mu m$ bis $100\mu m$ durchgeführt, um beispielsweise die Strahlungsbilanz, d.h. die Differenz zwischen der auf die Erdoberfläche auftreffenden und der von dieser ausgehenden bzw. reflektierten Strahlung, und deren Komponenten zu bestimmen. Hierzu muß die aus dem gesamten oberen und unteren Halbraum (mit jeweils einem Raumwinkel $2\pi$) kommende Strahlung erfaßt und gemessen werden. Solche Messungen werden heutzutage nicht nur stationär, sondern in zunehmendem Maße auch von Luft- und Raumfahrzeugen aus durchgeführt.

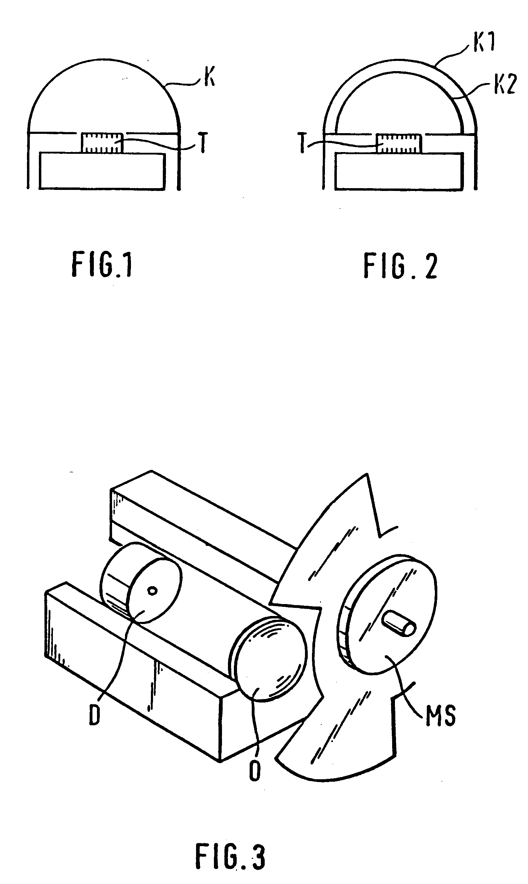

Für solche Messungen sind bereits zahlreiche Geräte entwickelt worden. Solche Geräte weisen beispielsweise, wie in Fig.1 und 2 schematisch angedeutet ist, eine Thermosäule T auf, deren horizontal angeordnete, aktive Lötstellen geschwärzt und gegenüber den übrigen Teilen des Geräts isoliert angeordnet sind. Bei einem Strahlungseinfall erhöht sich die Temperatur der aktiven Lötstellen gegenüber der Temperatur der passiven Lötstellen, die mit einer verhältnismäßig großen Masse des Geräts thermisch verbunden sind. Die entstehende Thermospannung ist, gegebenenfalls zusammen mit anderen Meßgrößen, wie beispielsweise der Temperatur der passiven Lötstellen, ein Maß für die auftreffende Strahlung. Zur Vermeidung eines advektiven und eines konvektiven Wärmeaustausches mit der umgebenden Luft ist die Thermosäule T im allgemeinen durch eine Windschutz-Abdeckhaube K geschützt, die aus einem Material hergestellt ist, welches für die zu messende Strahlung durchlässig ist, wie beispielsweise Glas, Poly-äthylen, u.ä.

Um bezüglich eines Wärmeaustausches eine noch bessere Abschirmung zu erreichen, sind um die Thermosäule T bei einer anderen herkömmlichen Ausführung zwei halbkugelförmige Abdeckhauben K1 und K2 angeordnet, die ebenfalls aus einem Material hergestellt sind, welches bezüglich der zu messenden Strahlung durchlässig ist.

Ferner ist aus der US-PS 3 390 576 eine Einrichtung zum Messen von Sonnenstrahlung bekannt, bei der eine Anzahl von Solarzellen als Detektoren auf einer Halterungsplatte angeordnet sind, welche von einer Kuppel oder Haube bzw. einer Glasglocke eingeschlossen sind.

In der DE-OS 31 27 086 ist ein Gerät zur Messung des Tageslichtes, d.h. der Sonnenscheindauer beschrieben. Hierzu besitzt das Gerät ein photoelektrisches Element, dessen der Helligkeit entsprechende Signale elektronisch verarbeitet werden können. Dies geschieht mit Hilfe eines horizontal angeordneten Zylinders mit einem sektorenförmigen Schlitz, wobei der Zylinder selbst um eine vertikale Achse rotiert. Das Blickfeld des Geräts ist dadurch sektorförmig und rotiert um eine Achse, so daß nacheinander der gesamte Himmel oder Teilbereiche desselben abgetastet werden.

Durch die Rotation des waagrecht angeordneten Zylinders mit dem sektorenförmigen Schlitz wird die Strahlung aus verschiedenen Sektoren oder Punkten des Halbraums nach dem Gleichlichtverfahren nacheinander gemessen. Eine Modulation im Sinne eines sogenannten Wechsellicht-Verfahrens erfolgt nur bei Differenzen, beispielsweise zwischen Sonnen- und Himmelsstrahlung.

Bei diesen mit Gleichlicht arbeitenden Geräten ist neben einer verhältnismäßig großen Trägheit, die sich beispielsweise beim Flugzeug-Einsatz bemerkbar macht, vor allem nachteilig, daß Temperaturänderungen des Geräts selbst und insbesondere Temperaturänderungen der im allgemeinen nicht völlig transparenten Abeckhauben das Meßsignal stark beeinflussen können. Um diesen Einfluß bis zu einem gewissen Grad zu mindern, sind beispielsweise die beiden in Fig.2 dargestellten konzentrischen Abdeckhauben K1 aund K2 angebracht worden. Trotzdem ist die Meßgenauigkeit derartiger Geräte vor allem infolge von Konvektionsvorgängen unter diesen Abdeckhauben begrenzt.

Die Nachteile dieser herkömmlichen Geräte können durch die Anwendung des sogenannten Wechsellicht-Verfahrens beseitigt werden. Dieses Verfahren ist Stand der Technik bei Geräten mit einem begrenzten Öffnungswinkel, der erheblich kleiner ist als der Raumwinkel $2\pi$. Wie in Fig.3 schematisch dargestellt, ist ein Strahlungsdetektor D, der eine hohe Empfindlichkeit und eine sehr geringe Trägheit aufweist, wie beispielsweise ein Halbleiter-Bolometer, ein Photoelement oder ein pyroelektrischer Detektor, hinter einer schwingenden oder rotierenden Modulatorscheibe MS angebracht, die dann wechselweise den Detektor D für die zu messende Strahlung freigibt oder ihn abdeckt. In der in Fig.3 dargestellten Ausführungsform ist vor dem Detektor zur Bündelung der Strahlung eine Linsenanordnung O vorgesehen. Das Meßsignal von dem Detektor D ist deshalb eine Wechselspannung, welche der Differenz der Strahlungsströme von Meßobjekt und Modulatorscheibe entspricht und nicht von Emissionsänderungen der Optik, des Gehäuses usw. beeinflußt wird, soweit diese sich hinter der Modulatorscheibe befinden.

Ferner sind in den deutschen Offenlegungsschriften 21 05 050 und 29 42 790 eine Anordnung bzw. ein Lichtmeßgerät zum Messen von elektromagnetischer Strahlung beschrieben. Auch bei diesen Geräten ist ähnlich wie bei der in Fig.3 dargestellten Anordnung vor einem Detektor bzw. Strahlungsdetektor ein Zerhacker oder ein Lichtfilter in Form eines Zerhackers bzw. eine schwingende oder rotierende Modulatorscheibe angebracht. Mit Hilfe des Zerhackers bzw. der Modulatorscheibe wird eine Wechselspannung oder ein Wechselstrom in den nachgeschalteten Meßeinrichtungen erzeugt, um auf diese Weise mit Hilfe des Wechsellichtverfahrens die Messung durchführen zu können.

Der Vorteil des Wechsellichtverfahrens besteht darin, daß Emissionsänderungen innerhalb des Systems (nämlich am Detektor, Gehäuse, Fenster oder der Optik), welche beispielsweise durch Temperaturänderungen hervorgerufen werden, sich in gleicher Weise auf die Meß- und die Vergleichsstrahlung auswirken und demzufolge der Wechselspannung oder dem Wechselstrom nicht aufgeprägt werden. Bei der Verwendung einer Modulatorscheibe bzw. eines entsprechend wirkenden Zerhackers wird eine Modulation für eine aus dem Halbraum mit einem Raumwinkel von $2\pi$ kommende Strahlung schwierig, weil nicht der gesamte Halbraum erfaßbar ist und bei niedrigen Winkeln ein starker Abfall festzustellen ist.

Eine Erfassung der aus dem Halbraum kommenden Strahlung wäre im Prinzip durch eine Abtastung des gesamten Halbraums mit Hilfe eines Detektors möglich, der in einem zylindrischen Rohr untergebracht ist, das unter einer strahlungsdurchlässigen Halbkugel um eine horizontale und eine vertikale Achse drehbar angeordnet ist, wie es in der DD 118 981 vorgesehen ist. Dieser Detektor müßte dann durch einen Modulator abwechselnd abgedeckt und freigegeben werden.

Dieses Verfahren wäre jedoch sehr umständlich und zeitaufwendig, da die einzelnen Meßwerte entsprechend dem Lambert'schen Kosinussatz auch noch für eine horizontale Empfängerfläche umgerechnet werden müßten.

Zur Messung der aus dem dem Raumwinkel $2\pi$ entsprechenden Halbraum kommenden elektromagnetischen Strahlung ist in der DE 34 23 494 eine nach dem Wechsellicht-Verfahren arbeitende Einrichtung angegeben, bei welcher zwei der Form einer Abdeckhaube angepaßte Modulatoren entweder gleichsinnig mit unterschiedlichen Geschwindigkeiten oder gegenläufig um eine senkrechte durch den Detektor verlaufende, gedachte Achse rotieren. Aber dach diese Einrichtung weist noch verschiedene Nachteile auf. So kann beispielsweise mit der aus der DE 34 23 494 bekannten Einrichtung in einer Meßperiode, d.h. einer vollständigen Umdrehung der Modulatoren immer nur höchstens die Hälfte der aus dem Halbraum kommenden Strahlung erfaßt werden, da die andere Hälfte abgedeckt ist. Dies hat eine Verminderung der Empfindlichkeit des Geräts zur Folge und bedingt außerdem, um die Strahlung des gesamten Halbraums zu erfassen, daß mindestens zwei Meßperioden erforderlich sind. Außerdem erfordert die bekannte Einrichtung einen aufwendigen Antriebsmechanismus und es können sich zusätzliche Schwierigkeiten bei der Reinigung der Abdeckhaube ergeben. Obendrein können bei zenitnaher Strahlung Abschattungen am Detektor auftreten, was insbesondere bei einen Sonnenstand im Zenit oder nahe des Zenits von besonderem Nachteil ist.

Im Hinblick auf diese Erkenntnisse und Nachteile der aus dem Stand der Technik bekannten Meßeinrichtungen ist es daher Aufgabe der Erfindung, eine Einrichtung zur Messung elektromagnetischer Strahlung zu schaffen, mit welcher die aus dem Halbraum entsprechend einem Raumwinkel von $2\pi$ oder die aus dem Raum entsprechend einem Raumwinkel von $4\pi$ kommende elektromagnetische Strahlung sowohl bei kleinen Einfallswinkeln als auch bei einer aus dem Zenit oder nahe dem Zenit kommenden Sonnenstrahlung weitgehend fehlerfrei mit hoher Meßgenauigkeit gemessen werden kann. Gemäß der Erfindung ist dies durch die Merkmale im kennzeichnenden Teil des Anspruchs 1 erreicht. Vorteilhafte Weiterbildungen sind Gegenstand der abhängigen Ansprüche.

Bei der Einrichtung gemäß der Erfindung ist zur Strahlungsmessung aus einem dem Raumwinkel von $2\pi$ entsprechenden Halbraum oder aus einem dem Raumwinkel von $4\pi$ entsprechenden Raum zur abwechselnden vollständigen Abdeckung und Freigabe des oder der Strahlungsdetektoren sowie der zugeordneten strahlungsdurchlässigen Abdeckhauben ein relativ zu dem oder den Detektoren bewegbarer Modulator in Form eines oder meherer aufgeschnittener, hohler Torussegmente vorgesehen, deren Rand radial verläuft oder auch anders ausgebildet oder geformt sein kann.

Gemäß der bevorzugten Ausführungsform der Erfindung sind ein oder mehrere aufgeschnittene, hohle Torussegmente des Modulators am Rand einer rotierenden kreisförmigen Scheibe befestigt, welche um eine zur Empfangsfläche des oder der Detektoren parallelen Achse rotiert. Hierbei rotiert der erfindungsgemäße Modulator um die horizontale Achse in einem solchen Abstand von dem einen oder von mehreren jeweils durch eine strahlungsdurchlässige Haube abgedeckten Detektoren, daß diese von dem oder den rotierenden, hohlen Torussegmenten abwechselnd verdeckt und freigegeben werden. Bei der Verwendung des erfindungsgemäßen Modulators ist somit in der Phase der Freigabe bei Verwendung eines Detektors dieser Detektor jeweils der Strahlung des gesamten Halbraums bzw. bei Verwendung von zwei Detektoren, welche beispielsweise nach oben und nach unten diametral zueinander angeordnet sind, jeweils der Strahlung des gesamten Raums ausgesetzt.

Außerdem ergeben sich bei dieser Meßeinrichtung hinsichtlich der Zugänglichkeit der Abdeckhaube, um diese beispielsweise zu reinigen, keine besonderen Schwierigkeiten. Obendrein ist die Antriebsvorrichtung für den Modulator in verhältnismäßig einfacher Weise auszuführen. Ein besonderer Vorteil der erfindungsgemäßen Meßeinrichtung besteht darin, daß bei ihr in einfacher Weise mehrere Meßgeräte für die aus dem dem Raumwinkel $2\pi$ entsprechenden Halbraum kommende Strahlung betrieben werden können, wenn die Meßgeräte in verschiedene Richtungen ausgerichtet sind, beispielsweise nach oben und nach unten oder auch dazwischen in vorgegebenen Abständen voneinander angeordnet sind.

Außerdem ist durch die Verwendung eines Modurlators mit min destens einem aufgeschnittenen, hohlen Torussegment sichergestellt, daß es auch bei einer zenitnahen Strahlung nicht zu Abschattungen des jeweiligen Detektors kommt, so daß insbesondere auch bei einem Sonnenstand im Zenit oder nahe des Zenits mit der erfindungsgemäßen Einrichtung genaue Meßergebnisse erhalten werden können.

Nachfolgend wird die Erfindung anhand von bevorzugten Ausführungsformen unter Bezugnahme auf die anliegenden Zeichnungen und im einzelnen erläutert. Es zeigen:

Fig.1 und 2 schematische Darstellungen von herkömmlichen Strahlungsmeßgeräten mit einer unter mindestens einer Abdeckhaube angeordneten Thermosäule,

Fig.3 eine schematische Darstellung einer nach dem Wechsellicht-Verfahren arbeitenden, herkömmlichen Meßanordnung,

Fig.4 eine horizontale Schnittansicht durch eine bevorzugte Ausführungsform der Erfindung entlang der Linie 4-4 der Fig.5, wobei je ein nach oben und unten ausgerichtetes Strahlungsmeßgerät durch den erfindungsgemäßen Modulator abgedeckt ist;

Fig.5 eine Schnittansicht entlang der Linie 5-5 in Fig.4;

Fig.6 eine horizontale Schnittansicht der in Fig.4 und 5 dargestellten Ausführungsform entlang der Linie 6-6 in Fig.7, wobei jedoch die jeweils nach oben und unten ausgerichteten Strahlungsmeßgeräte von dem Modulator freigegeben sind;

Fig.7 eine Schnittansicht entlang der Linie 7-7 in Fig.6;

Fig.8 eine horizontale Schnittansicht einer weiteren Ausführungsform der Erfindung entlang der Linie 8-8 in Fig.9, mit ebenfalls je einem nach oben und unten ausgerichteten Strahlungsmeßgerät, wobei durch einen Modulator nur eines der Meßgeräte abgedeckt ist, und

Fig.9 eine Schnittansicht entlang der Linie 9-9 der in Fig.8 wiedergegebenen Ausführungsform.

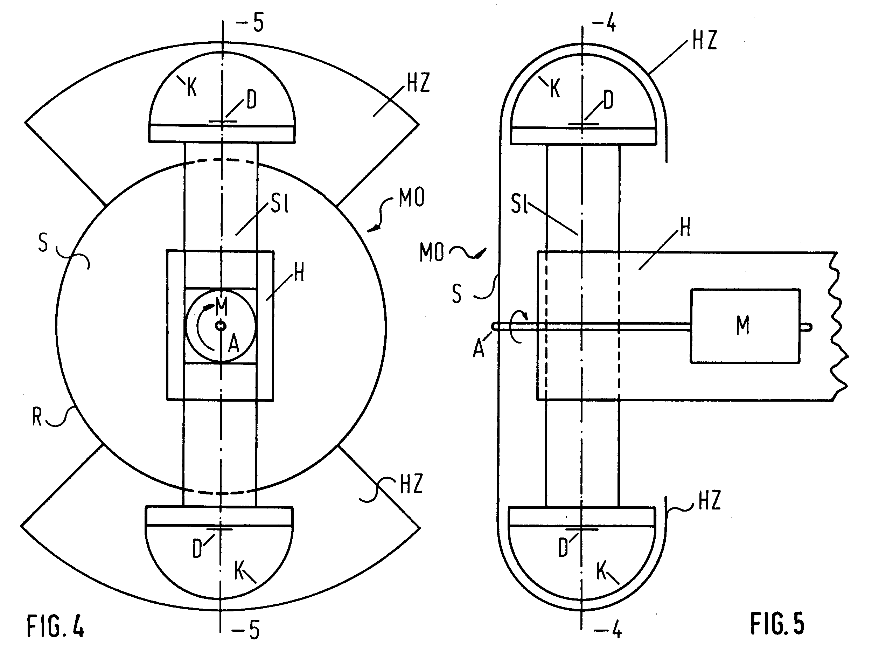

In Fig.4 ist in Draufsicht ein Querschnitt durch eine Ausführungsform einer erfindungsgemäßen Meßeinrichtung dargestellt, welche zwei nach oben bzw. unten ausgerichtete Strahlungsmeßgeräte mit je einem Detektor D und einer Abdeckhaube K aufweist, und welche durch eine Säule S1 miteinander verbunden sind. In einer Gerätehalterung H ist ein Motor M zum Antrieb eines Modulators MO untergebracht, dessen Achse A mit der Achse des Motors M zusammenfällt. Der mittlere Teil des Modulators M weist in dem wiedergegebenen Ausführungsbeispiel die Form einer Kreisscheibe S auf, an deren Rand R an zwei diametral einander gegenüberliegenden Bereichen je ein aufgeschnittenes, hohles Torussegment HZ angebracht ist bzw. mit der kreisförmigen Scheibe S eine Einheit bildet. Hierbei weisen die diametral zueinander am Rand der Scheibe S vorgesehenen hohlen Torussegmente HZ im Querschnitt die aus der Seitenansicht der Fig.5 ersichtliche Form auf.

In Fig.4 ist die Stellung des Modulators MO wiedergegeben, bei welcher die nach unten und oben ausgerichteten Strahlungsmeßgeräte mit den Detektoren D und den Abdeckhauben K durch die beiden aufgeschnittenen, hohlen Torussegmente HZ des Modulators vollständig abgedeckt sind. Fig.5 ist eine Schnittdarstellung der Fig.4 entlang der Linie 5-5.

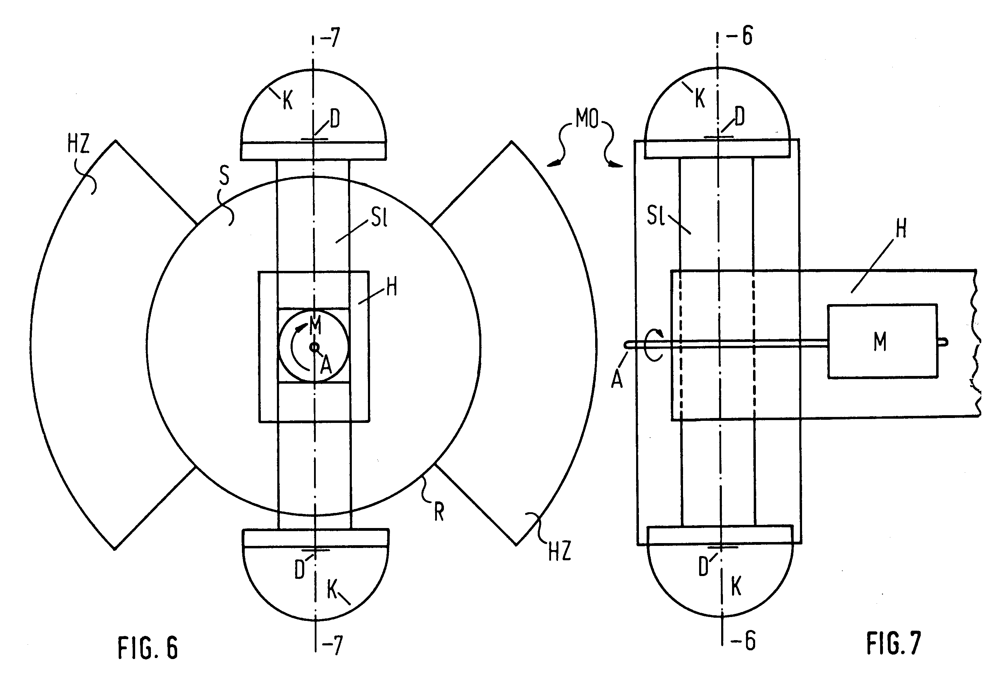

In Fig.6 und 7 ist dieselbe Ausführungsform des erfindungsgemäßen Meßgeräts wiedergegeben, wobei jedoch im Unterschied zu den Fig.4 und 5 der Modulator MO um 90° gedreht sind. Dadurch können die nach oben und unten ausgerichteten Strahlungsmeßgeräte zumindest die aus dem dem Raumwinkel von $2\pi$ entsprechenden Halbraum kommende Strahlung bzw. gegebenenfalls auch die aus dem dem Raumwinkel von $4\pi$ entsprechenden Raum kommende elektromagnetische Strahlung ungehindert aufnehmen.

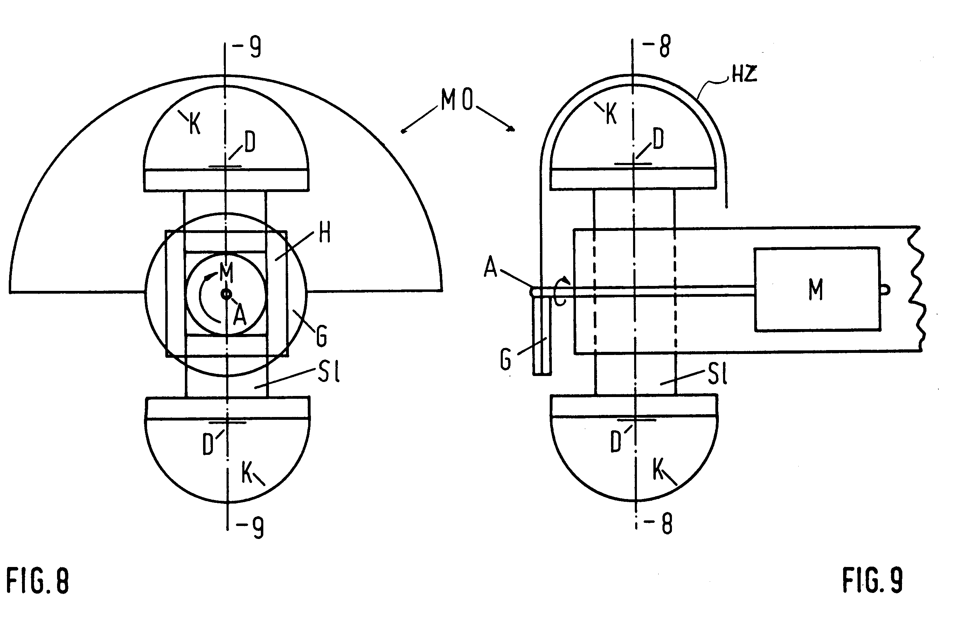

In Fig.8 und 9 ist eine weitere Ausführungsform der erfindungsgemäßen Meßeinrichtung für je ein nach oben und unten ausgerichtetes Strahlungsmeßgerät dargestellt, die jeweils ebenfalls wieder einen Detektor D und eine strahlungsdurchlässige Abdeckhaube K aufweisen. Ebenso wie bei der anhand von Fig.4 bis 7 beschriebenen Ausführungsform sind die beiden Strahlungsmeßgeräte durch eine Säule S1 miteinander verbunden und in einer Gerätehalterung H ist ebenso wie bei der Ausführungsform nach Fig.4 bis 7 der Motor M zum Bewegen eines Modulators MO untergebracht.

Im Unterschied zu der in Fig.4 bis 7 dargestellten Ausführungsform weist jedoch der Modulator MO nur ein aufgeschnittenes, hohles Torussegment HZ auf. Zum Ausgleich der dadurch entstehenden Unwucht ist bzw. sind auf der dem hohlen Torussegment HZ gegenüberliegenden Seite des Modulators vorzugsweise Ausgleichsgewichte G angebracht.

Fig.9 ist eine Schnittansicht entlang der Linie 9-9 in Fig.8. In den Fig.8 und 9 ist eine Stellung des Modulators MO wiedergegeben, bei welcher das in den beiden Figuren obere Meßgerät vollständig abgedeckt und das untere bzw. nach unten ausgerichtete Meßgerät der Strahlung frei ausgesetzt ist.

**Patentansprüche**

1. Einrichtung zur Messung der aus dem dem Raumwinkel $2\pi$ entsprechenden Halbraum oder aus dem dem Raumwinkel $4\pi$ entsprechenden Raum kommenden elektromagnetischen Strahlung, mit beim Raumwinkel $2\pi$ mindestens einem Detektor oder mit beim Raumwinkel $4\pi$ mindestens zwei Detektoren, der bzw. die jeweils unter einer strahlungsdurchlässigen Abdeckhaube angeordnet ist bzw. sind, dadurch **gekennzeichnet,** daß zur abwechselnden vollständigen Abdeckung und Freigabe des Strahlungsdetektors (D) oder der Strahlungsdetektoren (D) und der zugeordneten, strahlungsdurchlässigen Abdeckhaube(n) (K) ein Modulator (MO) in Form eines oder mehrerer aufgeschnittener, hohler Torussegmente (HZ) vorgesehen ist, der oder die um eine zur Empfangsfläche des oder der Strahlungsdetektoren (D) parallele Achse rotieren, und daß der Modulator (MO) mit einem Rand (R) am Außenrand einer rotierenden kreisförmigen oder halbkreisförmigen Scheibe (S) befestigt ist, die senkrecht zur Achse angeordnet ist und deren Drehpunkt auf der genannten Achse liegt.

2. Einrichtung nach Anspruch 1, dadurch **gekennzeichnet,** daß die aufgeschnittenen, hohlen Torussegmente (HZ) im Querschnitt halbkreisförmig, trapezförmig oder rechteckig sind.

**Claims**

1. Measuring device for the electromagnetic radiation from the half-space corresponding to the solid angle $2\pi$ or form the space corresponding to the solid angle $4\pi$, having at least one detector in the case of the solid angle $2\pi$ or having at least two detectors in the case of the solid angle $4\pi$, which is or are each arranged under a respective radiation-transparent shielding hood **characterised** thereby, that for the alternating complete shielding and exposure of the radiation detector (D) or of the radiation detectors (D) and the associated radiation-transparent shielding hood(s) (K) a modulator (MO) is provided in the shape of one or more cut up hollow torus segments (HZ), which rotates or rotate about an axis parallel to the receiving area of the radiation detector or detectors (D), and that said modulator (M) is fastened with a rim (R) at the outer rim of a rotating circular or semi-circular disc (S), which is arranged perpendicular to the axis and the center of rotation of which lies on said axis.

2. Device according to claim 1, **characterised** thereby, that the cut up hollow torus segments (HZ) are semi-circular, trapezoidal or rectangular in cross-section.

**Revendications**

1. Dispositif de mesure du rayonnement électromagnétique demi-spatial conformément à l'angle spatial $2\pi$ ou spatial correspondant à l'angle spatial $4\pi$, avec pour l'angle spatial $2\pi$ au moins un détecteur ou avec pour l'angle spatial $4\pi$ au moins deux détecteurs, qui est ou sont respectivement agencé(s) dans un capuchon de protection transmettant le rayonnement, caractérisé en ce qu'il est prévu pour le recouvrement complet et la libération en alternance du ou des détecteur(s) de rayonnement (D) et du ou des capuchon(s) affecté(s), transmettant le rayonnement (K), un modulateur (MO) sous forme d'un ou de plusieurs segments toriques (HZ) creux, découpés, qui entrent en rotation autour d'un axe parallèle pour la surface de réception du ou des détecteur(s) de rayonnement (D), et en ce que le modulateur (MO) est fixé par un bord (R) sur le bord extérieur d'un disque (S) rotatif circulaire ou semi-circulaire, qui est agencé perpendiculairement à l'axe et dont le point de rotation se situe sur l'axe cité.

2. Dispositif selon la revendication 1, caractérisé en ce que les segments toriques (HZ) creux, découpés sont de section transversale semi-circulaire, trapézoïdale ou rectangulaire.

FIG.1

FIG.2

FIG.3

FIG. 4

FIG. 5

EP 0 282 029 B1

FIG. 6

FIG. 7

EP 0 282 029 B1

FIG. 9

FIG. 8

10